# EUROPÄISCHE PATENTSCHRIFT

(11) **EP 2 100 277 B1**
(45) Veröffentlichungstag und Bekanntmachung des Hinweises auf die Patenterteilung: **09.01.2019**
(21) Anmeldenummer: 07856008.3
(22) Anmeldetag: 08.11.2007
(51) Int. Cl.: G07D 7/0043, G07D 7/00, G03H 1/22, G06K 7/12, G06K 7/14, G06K 19/06, G06K 7/10, B42D 25/29, B42D 25/305, B42D 25/328, G03H 1/00, G03H 1/24

(54) **SICHERHEITSELEMENT MIT OPTISCH VARIABLEM, MEHRFARBIGEM BARCODE**
SECURITY ELEMENT COMPRISING AN OPTICALLY VARIABLE, MULTI-COLOURED BAR CODE
ÉLÉMENT DE SÉCURITÉ À CODES-BARRES MULTICOLORES ET POUVANT VARIER DE MANIÈRE OPTIQUE

(30) Priorität: 30.11.2006 DE 102006057125
(43) Veröffentlichungstag der Anmeldung: 16.09.2009
(73) Patentinhaber: Bundesdruckerei GmbH, 10969 Berlin (DE)
(72) Erfinder: LEOPOLD, André, 10119 Berlin (DE); KUNATH, Christian, 12203 Berlin (DE); PAESCHKE, Manfred, 16348 Basdorf (DE)
(74) Vertreter: Mammel und Maser
(86) Internationale Anmeldenummer: PCT/DE2007/002055
(87) Internationale Veröffentlichungsnummer: WO 2008/064644

(56) Entgegenhaltungen:
- EP-A- 0 896 260
- WO-A-2005/034019
- US-A1- 2002 035 571
- US-A1- 2005 067 727
- US-A1- 2005 199 724
- US-A1- 2005 273 434
- US-A1- 2005 284 944
- US-B1- 6 478 223
- LENK B: "Die Neuordnung optischer Codierungen - Die Mutationen des strichcodes" INTERNET CITATION, [Online] 2003, XP007904362 Gefunden im Internet: URL:http://www.gs1-germany.de/content/e39/ e56/e552/e295/datei/32003/c303_ 20.pdf> [gefunden am 2008-03-20]

## Beschreibung

### Gebiet der Erfindung.

Die Erfindung betrifft ein Sicherheitselement mit einem optisch variablen Barcode, ein Sicherheits- und/oder Wertdokument mit einem solchem Sicherheitselement, ein Verfahren zur deren Herstellung, sowie Verfahren zu deren Auslesung.

Hintergrund der Erfindung und Stand der Technik.

Sicherheitselemente dienen dazu, ein Sicherheits- und/oder Wertdokument gegen Fälschung oder Kopieren zu sichern. In Sicherheitselementen sind oftmals auch individualisierende Angaben, beispielsweise Ausweisnummer, biometrische Daten, etc., enthalten. Diese können in Klarschrift bzw. Bildform oder optisch codiert bzw. maschinelesbar vorgesehen sein. In letzterem Falle sind insbesondere die sogenannten Barcodes als mit hoher Sicherheit maschinenlesbar bewährt.

Aus der Literaturstelle US 2005/0188576 A1 sind Barcodes in Ausbildung als Hologramme bekannt. Die insofern bekannten Barcodes weisen Barcode-Elemente auf, die lediglich 2 Zeichenwerte, "0" und "1" bzw. "weiß" oder "schwarz" einnehmen können. Bei einem binären Zahlensystem wird jedoch eine Vielzahl von Zeichen bzw. Zeichenstellen benötigt, um beispielsweise eine alphanumerische Information zu codieren. Entweder ist folglich der Barcode in seiner Ausdehnung, linear oder in der Fläche, groß, oder die Auslesesicherheit ist unbefriedigend.

Aus WO 2005/034019A2 sind zum einen Sicherheitsmerkmale bekannt, bei denen ein Hologramm Barcodes enthält und zum anderen Sicherheitsmerkmale die als farbige Hologramme ausgebildet sind.

Aus der Praxis ist ein sogenannter Color Ultra Code bekannt, welcher eine Variante eines zweidimensionalen Barcodes ist. Hierbei können Barcodeelemente verschiedene Farben einnehmen, was jedoch nur zu einer geringen Erhöhung der Datendichte auf Grund von Auswahlregeln für Farben benachbarter Pixel führt. Der insofern bekannte Color Ultra Code ist im Übrigen leicht zu fälschen bzw. zu kopieren, beispielsweise mit handelsüblichen Kopierern oder Scannern, und insofern wenig sicher.

### Technisches Problem der Erfindung.

Der Erfindung liegt daher das technische Problem zu Grunde, ein Sicherheitselement mit codierter Information anzugeben, das in seinen Abmessung bei erhöhter Datendichte klein baut und zugleich, ohne Verringerung der Datendichte, kopiersicher ist.

### Definitionen

Ein Sicherheitselement ist eine bauliche Einheit, die zumindest ein Sicherheitsmerkmal umfasst. Ein Sicherheitselement kann eine selbstständige bauliche Einheit sein, die mit einem Sicherheits- und/oder Wertdokument verbunden, beispielsweise verklebt werden kann, es kann sich aber auch um einen integralen Bestandteil eines Sicherheits- und/oder Wertdokumentes handeln. Ein Beispiel für erstes ist ein auf ein Sicherheits- und/oder Wertdokument aufklebbares Visum. Ein Beispiel für letzteres ist ein in einen Geldschein oder einen Ausweis integriertes, beispielsweise einlaminiertes Hologramm.

Ein Sicherheitsmerkmal ist eine Struktur, die nur mit (gegenüber einfachem Kopieren) erhöhtem Aufwand oder gar nicht unauthorisiert herstellbar bzw. reproduzierbar ist.

Als Sicherheits- und/oder Wertdokumente seien lediglich beispielhaft genannt: Personalausweise, Reisepässe, ID-Karten, Zugangskontrollausweise, Visa, Steuerzeichen, Tickets, Führerscheine, Kraftfahrzeugpapiere, Banknoten, Schecks, Postwertzeichen, Kreditkarten, beliebige Chipkarten und Haftetiketten (z.B. zur Produktsicherung). Solche Sicherheits- und/oder Wertdokumente weisen typischerweise ein Substrat, eine Druckschicht und optional eine transparente Deckschicht auf. Ein Substrat ist eine Trägerstruktur, auf welche die Druckschicht mit Informationen, Bildern, Mustern und dergleichen aufgebracht wird. Als Materialien für ein Substrat kommen alle fachüblichen Werkstoffe auf Papier- und/oder Kunststoffbasis in Frage.

Ein Barcode ist eine typischerweise flächige Musterstruktur, deren Muster für eine Zeichenfolge codiert. Man unterscheidet im wesentlichen eindimensionale Barcodes und zweidimensionale Barcodes. Zu den eindimensionalen bzw. linearen Barcodes zählen als Zweibreiten-Codes Code 2/5 Industrial, Code 2/5 Interleaved (ITF), Code 2/5 3 Striche Matrix, Code 39, Code 39 extended, und als Mehrbreiten-Codes Code 93, erweiterter Code 93, Code 128, EAN 8, EAN 13, UPC Version A, UPC Version E, Codabar. Die zweidimensionalen codes unterteilen sich in Stapelcodes und Matrixcodes. Zu den Stapelcodes zählen Code 49, Code 16K, Codablock (A, F, 256), IPC-2D, Supercode, PDF 417, Micro PDF, Color Ultra Code, Ultra Code. Zu den Matrixcodes zählen Array Tag, Aztec, Code One, Code (S), CP Code, Data Matrix, DataStrip, Dot Code A, MaxiCode, QR Code, MiniCode, SmartCode, Snowflake Code, AccuCode (3-DI), Vericode. Eine Kombination eines Linear- und Stapelcodes ist RSS-14.

Ein Barcode-Element ist ein Teilbereich eines Barcodes, der in dem Codierungssystem des Barcodes für ein einziges Zeichen codiert. Ein Barcode-Element wird auch als Pixel bezeichnet, insbesondere im Falle von zweidimensionalen Barcodes. Typischerweise sind Barcodes im binären Zahlensystem codiert und dann codiert ein Barcode-Element entweder für "0" oder für "1", indem es entweder aktiviert, beispielsweise schwarz, oder deaktiviert, beispielsweise weiss, ist. Entsprechend dem jeweiligen Barcode wird aus einer Folge von verschiedenen Barcode-Elementen eine zunächst binäre Zeichenfolge gebildet, die dann in andere Zeichenfolgen, beispielsweise eine alphanumerische Zeichenfolge, transformiert werden kann.

Ein optisch variables Element umfasst typischerweise eine Fläche bzw. einen flächigen Bereich, worin mikroskopische bzw. mit dem menschlichen Auge nicht erkennbare Oberflächenstrukturen eingerichtet sind. Hierzu gehören insbesondere Hologramme. Ein optisch variables Element zeigt auf Grund dieser Oberflächenstrukturen bei Betrachtung unter verschiedenen Auslesewinkelbereichen verschiedene Bilder bzw. optische Merkmale oder optische Muster bzw. Farben. Die Verschiedenheit kann dabei die Bilder bzw. Muster betreffen oder auch nur beispielsweise Farbe oder Helligkeit. Dabei kann die optische Variabilität auch von dem Inzidenzwinkelbereich einer Beleuchtung und/oder deren Farbe abhängen.

Als definierter Auslesewinkelbereich ist ein Raumwinkel um einen Ursprungsvektor in einem Polarkoordinatensystem, i.e. Breitenwinkel und Meridianwinkel, bezeichnet, aus welchem eine Betrachtung des Koordinatenursprungs erfolgt bzw. erfolgen soll für eine sichere Erkennung des Barcodes. Dabei ist jeweils ein betrachtetes Barcode-Element der Koordinatenursprung. Der Raumwinkel kann kleiner als π/2, vorzugsweise kleiner als π/4, weiterhin vorzugsweise kleiner als π/8, höchstvorzugsweise kleiner als π/16, sein.

Als definierter Inzidenzwinkelbereich ist ein Raumwinkel um einen Ursprungsvektor in einem Polarkoordinatensystem, i.e. Breitenwinkel und Meridianwinkel bezeichnet, aus welchem eine Beleuchtung des Koordinatenursprungs erfolgt bzw. erfolgen soll für eine sichere Erkennung des Barcodes. Dabei ist jeweils ein Barcode-Element der Koordinatenursprung. Der Raumwinkel kann kleiner als π/2, vorzugsweise kleiner als π/4, weiterhin vorzugsweise kleiner als π/8, höchstvorzugsweise kleiner als π/16, sein.

Bei einem Zeichensystem der Basis n kann jedes Zeichen n verschiedene Zeichenwerte einnehmen. Beim binären Zeichensystem sind dies 2 Zeichenwerte (0, 1), beim tertären Zeichensystem 3 Zeichenwerte (0, 1, 2) und beim quartären Zeichensystem 4 Zeichenwerte (0, 1, 2, 3). Um beispielsweise alle Buchstaben des lateinischen Alphabetes zu codieren, werden in einem binären Zeichensystem 5 Stellen bzw. Barcode-Elemente benötigt, während in einem tertiären Zeichensystem hierfür 3 Stellen bzw. Barcode-Elemente bereits ausreichen.

Ein Spatial Light Modulator erlaubt eine zweidimensional ortsaufgelöste Beleuchtung bzw. Bestrahlung eines meist flächigen Gegenstandes mit modulierter Intensität. Hierbei kann es sich beispielsweise um einem DMD (Digital Micromirror Device) Chip, LCD (Liquid Crystal Display) Transmissiondisplays, LCOS (Liquid Craystal on Silicon) Display handeln. Allen ist gemeinsam, dass das Display aus einer Vielzahl von Pixeln gebildet ist, wobei jedes Pixel unabhängig von anderen Pixeln aktivierbar oder deaktivierbar ist (auch Zwischenstufen sind möglich), wodurch durch entsprechende Ansteuerung der Pixels sich Muster oder Bilder projizieren lassen. Durch die freie Ansteuerbarkeit können auch ohne Weiteres verschiedene Bilder oder Muster in zeitlicher Folge hintereinander generiert werden, beispielsweise in Form individualisierender Barcodes für verschiedene Sicherheitselemente. Ein Spatial Light Modulator kann aber auch im weitesten Sinne jede Struktur sein, die Licht mit unterschiedlicher bzw. modulierter lateraler Intensität auf einen Holographic Recordable Film fallen läßt. Hierzu zählen auch Masken oder Druckfilme bzw. bedruckte Folien, welche teilweise transparent und teilweise weniger oder nicht transparent sind nach Maßgabe eines zu belichtenden zweidimensionalen Musters.

Ein Code ist individualisierend, wenn er einzigartig für eine Person oder einen Gegenstand oder eine Gruppe von Personen oder Gegenständen aus einer größeren Gesamtmenge an Personen oder Gegenständen ist. Ein für eine Gruppe von Personen innerhalb der Gesamtmenge der Einwohner eines Landes individualisierender Code ist beispielsweise die Stadt des Wohnortes. Ein für eine Person individualisierender Code ist beispielsweise die Nummer des Personalausweises. Ein für eine Gruppe von Geldscheinen innerhalb der Gesamtmenge der Geldschiene individualisierender Code ist die Wertigkeit. Für einen Geldschein individualisierend ist die Seriennummer.

Grundzüge der Erfindung und bevorzugte Ausführungsformen.

Zur Lösung des vorstehenden technischen Problems lehrt die Erfindung ein Sicherheitselement mit einem für eine Information codierenden Barcode, wobei der Barcode Barcode-Elemente mit verschiedenen Farben, die jeweils für verschiedene Zeichenwerte codieren, umfasst und wobei der Barcode als optisch variables Element ausgebildet ist.

Mit der Erfindung wird einerseits erreicht, dass die Datendichte, je nach Struktur des Barcodes bis auf das 2-fache, 4-fache oder mehr, erhöht werden kann. Dadurch kann das Sicherheitselement vergleichsweise klein ausgeführt werden, was den optischen Gesamteindruck eines mit dem Sicherheitselement versehenen Sicherheits- und/oder Wertdokumentes weniger stört. Andererseits kann das Sicherheitselement nicht mittels Fotokopiergeräten oder handelsüblichen Scannern reproduziert werden, da solche Geräte optisch variable Elemente nicht vollständig oder nur Verändert wiederzugeben in der Lage sind. Denn der Winkelbereich der Inzidenz der Beleuchtung ist bei solchen Geräten extrem weit bzw. der Winkel der Aufnahme invariant, wodurch nur ein Teil des Sicherheitselementes zur Abbildung gelangt bzw. die Wiedergabe des Sicherheitselementes verändert wird.

Der Barcode ist erfindungsgemäß als holographisches Element ausgebildet, oder bildet einen Teil eines (flächenmäßig größeren und/oder aus mehreren übereinander gelagerten Hologrammen gebildeten) holographischen Elementes.

Der Barcode kann nach einem nicht beanspruchten Ausführungsbeispiel bei Beleuchtung mit weißem Licht oder spektral sortiertem und auf das Element abgestimmten Licht, das unter einem definierten Inzidenzwinkelbereich auf das Sicherheitselement gestrahlt wird, unter einem definierten Auslesewinkelbereich erkennbar und auslesbar sein. Erfindungsgemäß sind Barcode-Elemente mit verschiedenen Farben bei Beleuchtung mit Licht unter verschiedenen und nicht überlappenden definierten Inzidenzwinkelbereichen unter einem Auslesewinkelbereich oder unter mehreren verschiedenen und nicht überlappenden definierten Auslesewinkelbereichen erkennbar und auslesbar.

Vorzugsweise codiert jedes Barcode-Element für einen Zeichenwert eines Zeichensystems der Basis n, wobei n = f +1, wobei f die Anzahl der verschiedenen Farben ist und wobei n > 2 ist. Insbesondere kann f 2 oder 3 sein. Die Farben können verschiedene Wellenlängen im Sichtbaren, IR oder UV aufweisen, beispielsweise ausgewählt sein aus der Gruppe bestehend aus "rot, grün und blau". Als weiterer Zeichenwert tritt vorzugsweise "nicht aktiv", beispielsweise schwarz oder weiss oder eine andere, verschiedene Farbe hinzu.

Der Barcode verschiedener Sicherheitselemente kann für verschiedene Informationen codieren. Dann handelt es sich um einen individualisierenden Barcode.

Ein erfindungsgemäßes Sicherheitselementes kann beispielsweise zur Herstellung eines Sicherheits- und/oder Wertdokumentes verwendet werden, wobei das Sicherheitselement auf oder in dem Sicherheits- und/oder Wertdokument appliziert oder hierauf oder hierin gebildet wird. Eine Applikation auf einem Sicherheits- und/oder Wertdokument kann beispielsweise durch Aufkleben erfolgen. Eine Applikation in einem Sicherheits- und/oder Wertdokument kann beispielsweise durch Einlaminieren erfolgen. Eine Bildung in einem Sicherheits- und/oder Wertdokument kann beispielsweise gemäß der Literaturstelle DE 10 2004 053 367 A1 erfolgen.

Die Erfindung betrifft des Weiteren ein Sicherheits- und/oder Wertdokument mit einem erfindungsgemäßen Sicherheitselement.

Ein weiterer Gegenstand der Erfindung ist ein Verfahren zur Herstellung eines erfindungsgemäßen Sicherheitselementes oder eines erfindungsgemäßen Sicherheits- und/oder Wertdokumentes, mit den folgenden Verfahrensschritten: a) eine Information wird in eine Zeichenfolge eines Zeichensystems der Basis n transformiert, b) die Zeichenfolge aus Stufe a) wird in den Barcode transformiert, c) der Barcode aus Stufe b) wird in ein Modulatorsignal für einen Spatial Light Modulator transformiert oder in einen Spatial Light Modulator umgewandelt, d) ein Substrat mit einer photosensitiven Schicht wird über einen für zumindest zwei Farben bzw. Wellenlängen des vorzugsweise sichtbaren Lichtes hergestellten Holographiemaster und unter Zwischenschaltung des ggf. mit dem Signal aus Stufe c) modulierten Spatial Light Modulators belichtet. Hierbei kann der Holographiemaster beispielsweise ein Mattscheiben-Master gemäß der Literaturstelle EP 0 896 260 A2 sein bzw. ein Master, in welchen ein Transmissions- oder Reflektionshologramm einer Mattscheiben einbelichtet ist. Es versteht sich, dass in fachüblicher Weise mittels eines Referenzstrahles die gewünschte Interferenz erzeugt wird.

Hinsichtlich des Masters sind im Einzelnen die verschiedensten Varianten möglich. So können gemäß einem nicht beanspruchten Ausführungsbeispiel die Winkel der Einstrahlung (Inzidenzwinkelbereich) und die Winkel der Reflektion bzw. Beugung (Auslesewinkelbereich) für verschiedene Farben gleich sein. Dann erhält man einen holografischen Barcode, der bei Beleuchtung mit weissem Licht in dem durch die Herstellung des Masters definierten Inzidenzwinkelbereich in dem (einzigen) Auslesewinkelbereich mittels einer farbselektiven und ortsauflösenden Photodetektors, beispielsweise einer Farb-CCD-Kamera, auslesbar ist.

Erfindungsgemäß ist der Master für verschiedene Farben mit verschiedenen Inzidenzwinkelbereich/Auslesewinkelbereich-Paaren versehen. Dies bedeutet, dass zur Aufnahme einer bestimmten Farbe des Barcodes die Einrichtung des vorgegebenen Inzidenzwinkelbereiches für das einfallende Licht, welches weiss sein oder die betreffende Farbe haben kann, sowie des vorgegebenen Auslesewinkelbereiches für den Photodetektor, notwendig ist. Dies muss zudem für die verschiedenen Farben entsprechend den jeweiligen Paaren erfolgen. Wenn die Auslesewinkelbereiche der verschiedenen Farben gleich sind, so genügt die Einrichtung eines ortsfesten Photodetektors zur Aufnahme des Barcodes. Dann kann beispielsweise durch weißes Licht oder Licht der zum betreffenden Inzidenzwinkelbereich zugeordneten Farbe ein Abbild des Barcodes auf dem Photodetektor erzeugt werden. Sind hierzu die betreffenden Lichtquellen gleichzeitig aktiviert, so wird das vollständige farbige Abbild des Barcodes erzeugt und die Aufnahme kann beispielsweise mittels einer Farb-CCD-Kamera erfolgen. Werden die betreffenden Lichtquellen (weiss oder in der betreffenden Farbe) sequenziell aktiviert, so entsteht eine Sequenz von jeweils einer Farbe zugeordneter Abbilder, zu deren Aufnahme beispielsweise eine schwarz/weiss-CCD-Kamera ausreicht. Mit der Sequenzinformation der Belichtung (Reihenfolge der aktivierten Lichtquellen) kann dann für die Sequenz der Abbilde die Farbzuordnung getroffen und der vollständige farbige Barcode bzw. dessen Informationsgehalt rekonstruiert werden.

Im Folgenden wird die Erfindung anhand von Ausführungsbeispielen näher erläutert.

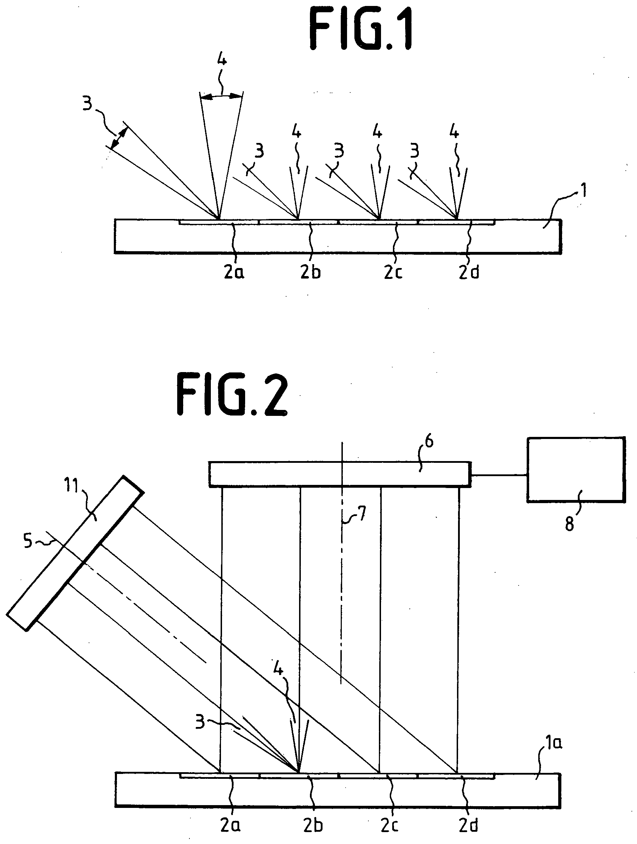

Nicht beanspruchtes Beispiel 1: holographischer Barcode, wobei Inzidenzwinkelbereich und Auslesewinkelbereich für verschiedene Farben gleich sind. In der Figur 1 erkennt man einen Master 1 zur Herstellung eines Barcodes, wobei Inzidenzwinkelbereiche 3 und Auslesewinkelbereiche 4 für verschiedene Farben gleich sind (grundsätzlich sind beide Winkelbereiche in Bezug auf Auslesung und Inzidenz vertauschbar). Es handelt sich um eine holographische Abbildung einer Mattscheibe gemäß der Literaturstelle EP 0 896 260 A2, die nicht nur bei einer Wellenlänge, sondern bei drei Wellenlängen, im Beispiel der Farben rot, grün und blau, rekonstruiert. Dadurch kann ein Pixel 2a-d nicht nur 2 Zeichenwerte, gesetzt bzw. nicht gesetzt, wie im Stand der Technik einnehmen, sondern vielmehr 4 Zeichenwerte, nämlich nicht gesetzt, rot, grün oder blau. Der Informationsgehalt eines Pixels 2a-d ist also verdoppelt. Im Beispiel rekonstruiert das Pixel 2a in rot, das Pixel 2b in grün, und das Pixel 2c in blau. Das Pixel 2d rekonstruiert als nicht gesetzt, i.e. es findet keine Reflexion statt.

In der Figur 2 erkennt man ein mittels des Masters 1, beispielsweise als Kontaktkopie hergestelltes Hologramm 1a mit einem erfindungsgemäßen Barcode im Querschnitt. Die Pixels 2a-d erstrecken sich dabei als Balken in Richtungen senkrecht zur Zeichenebene. Die Auslesung erfolgt durch Bestrahlung mit Licht aus einer Strahlungsquelle 11, deren optische Strahlungsachse 5 in dem Inzidenzwinkelbereich 3 liegt. Das Licht kann weißes Licht sein, also alle rekonstruierenden Wellenlängen enthalten. Eine Auslesung erfolgt dann mittels eines in zumindest einer Dimension ortsauflösenden farbdiskriminierenden Photodetektors, beispielsweise einer Farbkamera 6, deren optische Achse 7 innerhalb des Auslesewinkelbereiches 4 verläuft. Die Ortsauflösung der Kamera 6 kann im Falle eine klassischen eindimensionalen Balken-Barcodes, wie im Beispiel, eindimensional sein, wobei die Achse der aufgelösten Dimension senkrecht zu den Balken und in der Ebene der Balken verläuft. Wird ein zweidimensionaler Barcode eingesetzt, so ist die Kamera 6 vorzugsweise eine zweidimensional auflösende Kamera, wobei die Ebene der zwei Dimensionen der Auflösung parallel zur Ebene des Barcodes liegt. Selbstverständlich ist es aber auch möglich, eindimensionale oder zweidimensionale Barcodes mit einer nicht ortauflösenden Kamera 6 auszulesen, wobei dann jedes Pixel einzeln und in vorgegebener Richtung und Reihenfolge in die optische Achse der Kamera 6 gebracht werden muß, sei es durch entsprechende Relativbewegung des Hologramms 1a unter der ortsfesten Kamera 6, sei es durch entsprechende Relativbewegung der Kamera 6 über dem ortsfesten Hologramm 1a, sei es durch entsprechende Relativbewegung der optischen Achse 7 gegenüber dem Hologramm 1a, wobei es sich auf Grund des einzuhaltenden Auslesewinkelbereiches 4 um eine Parallelverschiebung handeln muss. Es versteht sich, dass der Begriff der Kamera in aller Allgemeinheit und unabhängig vom vorliegenden Ausführungsbeispiel alle Technologien der zweidimensional ortsauflösenden Aufnahme von Bildern bzw. Mustern umfasst. Beispielsweise kann die Kamera eindimensional auflösend mit einer Sensorreihe arbeiten. Dann wird die zweidimensionale Ortsauflösung durch eine Relativbewegung von Sicherheitselement zur Kamera in einer Richtung, die nicht parallel, beispielsweise orthogonal, zur Sensorreihe, erzielt. Im einfachsten Fall wird jedoch eine zweidimensional auflösende Sensormatrix eingesetzt.

Der mit der Farbkamera ausgelesene Barcode wird dann mittels einer Auswerteelektronik 8 in eine Zeichenfolge in einem Zahlensystem der Basis 4 und dann beispielsweise in eine Dezimalzahl oder in alphanumerische Zeichenfolge umgewandelt und angezeigt bzw. elektronisch weiter verarbeitet. Im Beispiel steht das Pixel 2a für 1, das Pixel 2b für 2, das Pixel 2c für 3 und das Pixel 2d für 0. Der Barcode mit der Zeichenwertfolge "1230" codiert im Dezimalsystem somit für 0 * 4⁰ + 3 * 4¹ + 2 * 4² + 1 * 4³, also die Zahl 108. Entsprechendes gilt für 2 Farben oder mehr als drei Farben, wobei das codierte Zahlensystem dann die Basis n = f + 1 mit f als Anzahl der verschiedenen Farben aufweist.

Während bei der Auslesung des Hologramms 1a mit weißem Licht und einer Farbkamera eine gleichzeitige Auslesung aller Pixel 2a-d des Barcodes erfolgt, kann alternativ hierzu auch eine sequentielle Auslesung erfolgen. Hierzu wird das Hologramm 1a nacheinander mit weißem Licht oder mit Licht der Wellenlängen der für die Pixel 2a-d verwendeten Farben im Inzidenzwinkelbereich 3 bestrahlt. Mit einer Farbkamera 6 (Bestrahlung mit weißem Licht) oder einer schwarz/weiss-Kamera 6 (sequentielle Bestrahlung mit Licht der verschiedenen Wellenlängen) wird jeweils ein Bild des bestrahlten Hologrammes 1a aufgenommen und so eine ortsaufgelöste Information über die Farbe jedes Pixels erhalten. Bezüglich der Varianten der ortsaufgelösten Auslesung gilt das Vorstehende analog. Die Auswertung erfolgt dann in üblicher Weise.

Beispiel 2: holographischer Barcode, wobei Inzidenzwinkelbereich und Auslesewinkelbereich für verschiedene Farben verschieden sind.

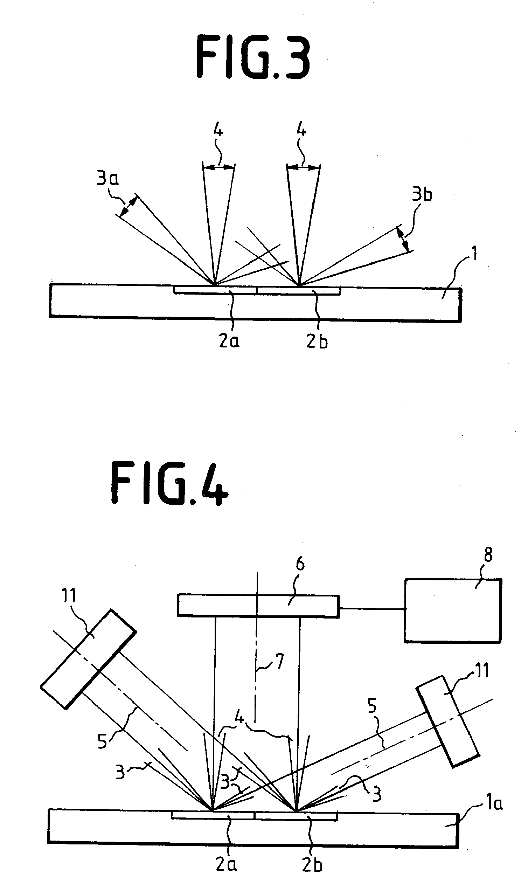

In der Figur 3 erkennt man einen Master 1 zur Herstellung eines Barcodes, wobei Inzidenzwinkelbereiche 3a,b für verschiedene Farben, hier der Übersichtlichkeit halber nur zwei verschiedene Farben (rot und grün) dargestellt, verschieden und Auslesewinkelbereiche 4 für verschiedene Farben gleich sind (grundsätzlich sind beide Winkelbereiche in Bezug auf Auslesung und Inzidenz vertauschbar). Das Pixel 2a (rot) rekonstruiert bei Beleuchtung von links, während das Pixel 2b (grün) bei Beleuchtung von rechts, jeweils bezogen auf die Zeichnungsebene, rekonstruiert. Demgegenüber rekonstruieren die Pixel 2a,b nicht bei Beleuchtung aus der jeweils anderen Richtung. Ansonsten gelten die Ausführungen des Beispiels 1 analog.

In der Figur 4 ist die Auslesung eines mittels des Masters 1 gemäß der Figur 3 hergestellten Hologramms 1a dargestellt. Im Auslesewinkelbereich 4 ist eine ortsauflösende Kamera 6 angeordnet.

Die Auslesung erfolgt durch Bestrahlung mit Licht aus zwei (im Falle von nur zwei rekonstruierenden Farben, ansonsten entspricht die Anzahl der Strahlungsquellen der Anzahl der verschiedenen rekonstruierenden Farben) Strahlungsquellen 11, deren optische Strahlungsachsen 5 in den jeweiligen, den betreffenden Farben zugeordneten Inzidenzwinkelbereichen 3a,b liegen. Das Licht der Strahlungsquellen 11 kann weißes Licht sein, also alle rekonstruierenden Wellenlängen enthalten, oder auch Licht der einem Inzidenzwinkelbereich 3a,b zugeordneten Farbe. Die Strahlungsquellen 11 können gleichzeitig oder sequentiell aktiviert werden. An Stelle des Einsatzes verschiedener Strahlungsquellen 11 kann auch eine einzige Strahlungsquelle 11 eingesetzt werden, deren optische Achse 5 sequentiell innerhalb der verschiedenen Inzidenzwinkelbereiche 3a,b geschwenkt wird.

Im Falle der gleichzeitigen Aktivierung der Strahlungsquellen 11 erfolgt die Auslesung des Barcodes mittels eines in zumindest einer Dimension ortsauflösenden farbdiskriminierenden Photodetektors, beispielsweise einer Farbkamera 6, deren optische Achse 7 innerhalb des Auslesewinkelbereiches 4 verläuft. Bezüglich der Ortsauflösung gelten die Ausführungen des Beispiels 1 analog.

Im Falle der sequentiellen Aktivierung mehrerer Strahlungsquellen 11 oder der sequentiellen Verschwenkung einer Strahlungsquelle 11 gelten die zur sequentiellen Auslesen in Beispiel 1 angebrachten Erläuterungen analog.

Nicht in den Beispielen dargestellt ist, dass auch die Auslesewinkelbereiche 4 für verschiedene Farben verschieden sein können. Auf Grund des reziproken Verhaltens des Hologramms 1a in Bezug auf Auslesewinkelbereiche 4 und Inzidenzwinkelbereiche 3 gelten die Ausführungen dieses Beispiels zu den Strahlungsquellen 11 dann entsprechend (auch) für die dann einzusetzenden Kameras 6 bzw. eine Kamera 6 mit verschwenkbarer optischer Achse 7. Hierbei kann dann mit für verschiedene Farben gleichen Inzidenzwinkelbereichen 3a,b oder mit für verschiedene Farben verschiedene Inzidenzwinkelbereiche 3a,b gearbeitet werden.

## Patentansprüche

1. Sicherheitselement mit einem für eine Information codierenden Barcode, wobei der Barcode Barcode-Elemente mit verschiedenen Farben, die jeweils für verschiedene Zeichenwerte codieren, umfasst und wobei der Barcode als holographisches Element ausgebildet ist, oder wobei der Barcode einen Teil eines holographischen Elementes bildet,
wobei Barcode-Elemente mit verschiedenen Farben bei Beleuchtung mit Licht unter verschiedenen und nicht überlappenden definierten Inzidenzwinkelbereichen unter einem Auslesewinkelbereich oder unter mehreren verschiedenen und nicht überlappenden definierten Auslesungswinkelbereichen erkennbar und auslesbar sind.

2. Sicherheitselement nach Anspruch 1, wobei jedes Barcode-Element für ein Zeichen eines Zeichensystems der Basis n codiert, wobei n = f + 1, wobei f die Anzahl der verschiedenen Farben ist und wobei n > 2 ist.

3. Sicherheitselement nach einem der Ansprüche 1 bis 2, wobei f 2 oder 3 ist.

4. Sicherheitselement nach einem der Ansprüche 1 bis 3, wobei die Farben Wellenlängen im Sichtbaren, IR oder UV aufweisen, insbesondere ausgewählt sind aus der Gruppe bestehend aus "rot, grün und blau".

5. Sicherheitselement nach einem der Ansprüche 1 bis 4, wobei der Barcode verschiedener Sicherheitselemente für verschiedene Informationen codiert.

6. Verfahren zur Herstellung eines Sicherheitselementes nach einem der Ansprüche 1 bis 5, mit den folgenden Verfahrensschritten:
a) eine Information wird in eine Zeichenfolge eines Zeichensystems der Basis n transformiert,
b) die Zeichenfolge aus Stufe a) wird in den Barcode transformiert,
c) der Barcode aus Stufe b) wird in ein Modulatorsignal für einen Spatial Light Modulator transformiert oder in einen Spatial Light Modulator umgewandelt,
d) ein Substrat mit einer photosensitiven Schicht wird über einen Holographiemaster und unter Zwischenschaltung des Spatial Light Modulators belichtet.

7. Verfahren zur Auslesung eines Sicherheitselementes nach Anspruch 1,
wobei das Licht weißes Licht oder Licht der einem jeweiligen Inzidenzwinkelbereich zugeordneten Farbe ist und das Licht unter den verschiedenen und nicht überlappenden definierten Inzidenzwinkelbereichen eingestrahlt wird, und wobei mittels eines Photodetektors mit einer optischen Achse in dem Auslesewinkelbereich der Barcode sequentiell oder parallel ausgelesen wird.

8. Verwendung eines Sicherheitselementes gemäß mindestens einem der Ansprüche 1 bis 5 oder eines Sicherheitselementes, welches gemäß Anspruch 6 herstellbar ist, zur Herstellung eines sicherheits- und/oder Wertdokumentes, wobei das Sicherheitselement auf oder in dem Sicherheits- und/oder Wertdokument appliziert oder hierauf oder hierin gebildet wird.

9. Sicherheits- und/oder Wertdokument mit einem Sicherheitselement nach einem der Ansprüche 1 bis 5 oder einem Sicherheitselement, welches gemäß Anspruch 6 herstellbar ist.

10. Sicherheits- und/oder Wertdokument nach Anspruch 9, wobei die Information eine individualisierende Information ist.

## Claims

1. A security element including a bar code which is an encoding for an item of information, said bar code comprising differently coloured bar code elements which are encodings for different character values, respectively, and said bar code being realised as a holographic element, or said bar code forming a part of a holographic element,
wherein differently coloured bar code elements, when exposed to light under different ranges of incidence angles which are defined so as not to overlap, are capable of being recognised and read out under a range of read-out angles or under a plurality of different ranges of read-out angles which are defined so as not to overlap.

2. The security element as claimed in claim 1, wherein each bar code element is an encoding for one character of a character system of the base n, with n = f + 1, with f being the number of different colours, and with n being > 2.

3. The security element as claimed in any one of claims 1 to 2, wherein f is 2 or 3.

4. The security element as claimed in any one of claims 1 to 3, wherein the colours have wave lengths in the visible range, in the IR range or in the UV range, and are selected, in particular, from among the group consisting of "red, green, and blue".

5. The security element as claimed in any one of claims 1 to 4, wherein the bar code of different security elements is an encoding for different items of information.

6. A method for producing a security element as claimed in any one of claims 1 to 5, said method comprising the process steps of:
a) transforming an information item into a character string of a character system of the basis n,
b) transforming the character string of step a) into the bar code,
c) transforming the bar code of step b) into a modulator signal for a spatial light modulator or converting it in a spatial light modulator,
d) exposing a substrate having a photosensitive layer to light via a holography master, with a spatial light modulator interposed therebetween.

7. A method for reading out a security element as claimed in claim 1,
wherein the light is white light or light having the colour associated with a specific range of incidence angles and the incident light is directed under the different ranges of incidence angles which are defined so as not to overlap, and wherein said bar code is read out sequentially or in parallel by means of a photodetector having an optical axis within the range of read-out angles.

8. A utilisation of a security element as claimed in any one of claims 1 to 5, or of a security element which can be produced as claimed in claim 6, for fabricating a security document and/or document of value, said security element being applied onto, or integrated into said security document and/or document of value or being formed thereon or therein.

9. A security document and/or document of value including a security element as claimed in any one of claims 1 to 5, or including a security element that can be produced as claimed in claim 6.

10. The security document and/or document of value as claimed in claim 9, wherein said information item is an item of individualising information.

## Revendications

1. Élément de sécurité pourvu d'un code-barres représentant un codage pour une information donnée, le code-barres comprenant des éléments code-barres de couleurs différentes qui représentent respectivement un codage pour différentes valeurs de caractère, et le code-barres étant réalisé en tant qu'élément holographique ou ledit code-barres formant une partie d'un élément holographique,
dans lequel, en cas d'éclairage utilisant de la lumière sous différentes plages d'angles d'incidence définies de manière à ne pas se chevaucher, des éléments code-barres de couleurs différentes peuvent être reconnus et lus selon une plage d'angles de lecture donnée ou selon plusieurs plages d'angles de lecture définies de manière à ne pas se chevaucher.

2. Élément de sécurité selon la revendication 1, dans lequel chaque élément code-barres représente un codage pour un caractère d'un système de caractères de la base n, étant donné que n = f + 1, que f est le nombre de couleurs différentes et que n > 2.

3. Élément de sécurité selon l'une quelconque des revendications 1 à 2, dans lequel f est égal à 2 ou à 3.

4. Élément de sécurité selon l'une quelconque des revendications 1 à 3, dans lequel les couleurs présentent des longueurs d'onde situées dans le domaine visible, IR ou UV, et sont en particulier choisies parmi le groupe des couleurs « rouge, vert et bleu ».

5. Élément de sécurité selon l'une quelconque des revendications 1 à 4, dans lequel le code-barres de différents éléments de sécurité représente un codage pour des informations différentes.

6. Procédé destiné à la fabrication d'un élément de sécurité selon l'une quelconque des revendications 1 à 5, lequel comprend les étapes suivantes :
a) une information est transformée en une suite de caractères d'un système de caractères de la base n,
b) la suite de caractères obtenue à l'étape a) est transformée en code-barres,
c) le code-barres obtenu à l'étape b) est transformé en un signal de modulateur destiné à un modulateur spatial de lumière (SLM) ou est converti dans un modulateur spatial de lumière,
d) un substrat pourvu d'une couche photosensible est exposé à la lumière à l'aide d'un master holographique en interposant un modulateur spatial de lumière.

7. Procédé destiné à la lecture d'un élément de sécurité selon la revendication 1,
lors duquel la lumière utilisée est de la lumière blanche ou de la lumière de la couleur correspondant à une plage d'angles d'incidence respective et la lumière est dirigée selon les différentes plages d'angles d'incidence définies de manière à ne pas se chevaucher, et lors duquel le code-barres est lu de manière séquentielle ou parallèle au moyen d'un photodétecteur ayant un axe optique situé dans la plage d'angles de lecture.

8. Utilisation d'un élément de sécurité selon au moins une quelconque des revendications 1 à 5 ou d'un élément de sécurité pouvant être fabriqué selon la revendication 6 en vue de réaliser un document de sécurité et/ou de valeur, dans laquelle l'élément de sécurité est appliqué sur ou dans le document de sécurité et/ou de valeur ou est formé sur ou dans ce dernier.

9. Document de sécurité et/ou de valeur pourvu d'un élément de sécurité selon l'une quelconque des revendications 1 à 5 ou pourvu d'un élément de sécurité qui peut être fabriqué selon la revendication 6.

10. Document de sécurité et/ou de valeur selon la revendication 9, dans lequel l'information est une information individualisante.
